# EUROPEAN PATENT SPECIFICATION

(11) **EP 3 993 341 B1**
(45) Date of publication and mention of the grant of the patent: **31.07.2024**
(21) Application number: 20832485.5
(22) Date of filing: 28.05.2020
(51) Int. Cl.: H04L 65/1069, H04L 65/1104, H04L 65/80, H04N 7/15, H04N 21/2225, H04N 21/4788

(54) **MULTIMEDIA DATA PROCESSING METHOD AND APPARATUS, STORAGE MEDIUM AND ELECTRONIC DEVICE**
MULTIMEDIADATENVERARBEITUNGSVERFAHREN UND -VORRICHTUNG, SPEICHERMEDIUM UND ELEKTRONISCHE VORRICHTUNG
APPAREIL ET PROCÉDÉ DE TRAITEMENT DE DONNÉES MULTIMÉDIA, SUPPORT D'INFORMATIONS ET DISPOSITIF ÉLECTRONIQUE

(30) Priority: 28.06.2019 CN 201910578317
(43) Date of publication of application: 04.05.2022
(73) Proprietor: Tencent Technology (Shenzhen) Company Limited, Shenzhen, Guangdong, 518057 (CN)
(72) Inventor: YANG, Yong, Shenzhen, Guangdong 518057, (CN); ZHANG, Yunfei, Shenzhen, Guangdong 518057, (CN); FAN, Huaheng, Shenzhen, Guangdong 518057, (CN)
(74) Representative: Sadler, Peter Frederick
(86) International application number: PCT/CN2020/092750
(87) International publication number: WO 2020/259192

(56) References cited:
- WO-A1-2017/012674
- CN-A- 108 063 773
- CN-A- 108 355 350
- CN-A- 108 496 341
- CN-A- 110 290 140
- US-A1- 2005 060 411
- US-A1- 2018 049 179
- US-A1- 2018 324 235
- US-A1- 2018 376 444
- TAE-GYU KANG ET AL: "SIP/SDP signaling of media gateway with transcoding function in converged network", ADVANCED COMMUNICATION TECHNOLOGY, 2004. THE 6TH INTERNATIONAL CONFERE NCE ON PHOENIX PARK, KOREA FEB. 9-11, 2004, PISCATAWAY, NJ, USA,IEEE, 9 February 2004 (2004-02-09), pages 842 - 845, XP032442659, ISBN: 978-89-5519-119-6, DOI: 10.1109/ICACT.2004.1292988

## Description

This application claims priority to Chinese Patent Application No. 201910578317.6, entitled "MULTIMEDIA DATA PROCESSING METHOD AND APPARATUS, STORAGE MEDIUM, AND ELECTRONIC DEVICE" and filed with the National Intellectual Property Administration, PRC on June 28, 2019.

### FIELD

This application relates to the technical field of communications, and in particular, to a multimedia data processing technology.

### BACKGROUND

Edge computing indicates a distributed computing architecture. In this architecture, for computing such as application processing and data analysis, a large-scale service that is completely processed by a remote node may be divided into small and easily manageable parts, which are distributed to edge computing nodes for processing. Because the edge computing nodes are closer to user terminal devices, data processing and transmission can be accelerated, thereby reducing latency.

In the related art, a service server is usually deployed on an edge computing node, to implement a high-quality and low-latency service. However, current edge computing-based multimedia data processing methods generally have problems such as high deployment complexity and low system operation and maintenance efficiency. Therefore, it is required to provide a new multimedia data processing method.

It is to be noted that information disclosed in the background part is only used for enhancing the understanding of the background of this application, and therefore, the background part may include information that does not constitute a limitation on the related art known to a person of ordinary skill in the art
T.-G. Kang et al., "SIP/SDP Signaling of Media Gateway with Transcoding Function in Converged Network" relates to SIP/SDP signaling of media gateway with transcoding function in converged network. There has been changed network environment from PSTN only to several networks with versatile terminal. Transcodec comes out new issue for communication each other with different codecs in converged network. We classify call setup methods without transcodec and with transcodec and four kind positioning of transcoding function among network resources; IP terminal, conference bridge, third party transcoding server, and media server. We designed the SIP/SDP signaling of media gateway with transcoding function in converged network. SIP/SDP call signaling for media server proposed in this paper needs less message between nodes than one of conference bridge and third party transcoding server.
US 2005/0060411 A1 provides a system and method that allows proxy servers to receive capability and preference information concerning user agents desiring to establish a media session. The proxy server compares the capabilities of the user agents and determines whether an incompatibility exists between them. In the event that an incompatibility does exist, the proxy server may invoke the services of an adaptation server to provide the necessary adaptation required to allow the media session to proceed. The adaptation system allows either the terminating or originating proxy server to make the adaptation determination to allow the adaptation server to modify the offered media session descriptions so that the media streams may be routed through the adaptation server to adapt between incompatible media parameters.
WO 2017/012674 A1 provides a method, comprising monitoring if a received user request of a terminal comprises an indication of a device profile of the terminal; selecting a platform device for further processing of the user request based on the device profile and an acceleration facility of the platform device. Furthermore, it is provided a method, comprising requesting, by an information request, an information on a service a user is allowed to invoke; receiving the information on the service in response to the information request; selecting a platform device for processing of a service request of the user based on the received information on the service and an acceleration facility of the platform device.
US 2018/0324235 A1 provides some examples herein can permit increasing the number of concurrent sessions that a network can support. An anchoring network device can anchor the sessions. A network gateway can transcode data of those sessions using transcoding units, and determine a utilization of the transcoding units. The anchoring network device can determine that the utilization satisfies a load criterion. The anchoring network device can adjust capability information of at least one session to reduce load on the network gateway. In some examples, the anchoring network device can send a session change message to terminal(s) of session(s). In some examples, the anchoring network device can remove a relatively high-load codec from a codec list of a session. In some examples, the anchoring network device can adjust capability information based on predicted load.

### SUMMARY

The invention is defined in the appended claims. A multimedia data processing method, a multimedia data processing system is, an electronic system, and a computer-readable storage medium are provided according to embodiments of this application, to reduce deployment complexity of an edge computing system, so as to improve system operation and maintenance efficiency.

According to a first aspect of this application, a multimedia data processing method is provided, which is performed by a signaling processing module deployed on a remote node and a media processing module deployed on an edge computing node. The method includes:
establishing, by the signaling processing module deployed on a remote node, a session between a terminal device and a media processing module deployed on an edge computing node, and controlling the session by the signaling processing module, wherein the remote node comprises a local network computing platform and/or an Internet computing platform; and
receiving, by the media processing module in a case that the session is established between the media processing module and the terminal device, multimedia data transmitted by the terminal device, and processing the multimedia data by the media processing module.

In an exemplary embodiment of this application, the establishing a session between a terminal device and a media processing module includes:
initiating a call request including information about a data reception address and transmitting the call request to the terminal device;
receiving response information of the terminal device for the call request, the response information including information about a data transmission address;
transmitting the information about the data transmission address to the media processing module, and instructing the media processing module to receive the multimedia data based on the data reception address; and
transmitting session establishment information to the terminal device.

In an exemplary embodiment of this application, the method further includes:
pre-configuring a forwarding policy in a user plane function entity deployed on the edge computing node, where
the forwarding policy includes: forwarding multimedia data whose receiving port is within a preset range to the media processing module, and
the information about the data reception address includes information about a target receiving port within the preset range.

In an exemplary embodiment of this application, the information about the data reception address includes a target receiving port. Before the transmitting the information about the data transmission address to the media processing module, the method further includes:
configuring a forwarding policy in a user plane function entity deployed on the edge computing node, the forwarding policy including: forwarding multimedia data whose receiving port is the target receiving port to the media processing module.

In an exemplary embodiment of this application, the method further includes:
deleting the forwarding policy in a case that the session is ended.

In an exemplary embodiment of this application, the method further includes:
forwarding, by the user plane function entity according to the forwarding policy, the multimedia data transmitted by the terminal device to the media processing module.

In an exemplary embodiment of this application, the controlling the session includes:
keeping the session.

In an exemplary embodiment of this application, the processing the multimedia data includes:
decoding the multimedia data to obtain decoded data; and
performing computational analysis on the decoded data to convert the decoded data into structured multimedia data.

In an exemplary embodiment of this application, after the processing the multimedia data, the method further includes:
transmitting the structured multimedia data to the remote node.

According to a second aspect of this application, a multimedia data processing system is provided, which includes a signaling processing module and a media processing module. The signaling processing module is deployed on a remote node, and is configured to: establish a session between a terminal device and the media processing module, and control the session, wherein the remote node comprises a local network computing platform and/or an Internet computing platform. The media processing module is deployed on an edge computing node, and is configured to: receive, in a case that the session is established between the media processing module and the terminal device, multimedia data transmitted by the terminal device, and process the multimedia data.

In an exemplary embodiment of this application, the system includes multiple signaling processing modules and multiple media processing modules, and the number of the signaling processing modules is less than the number of the media processing modules.

In an exemplary embodiment of this application, the system includes one signaling processing module and multiple media processing modules.

In an exemplary embodiment of this application, the remote node includes a local network computing platform and/or an Internet computing platform.

In an exemplary embodiment of this application, the signaling processing module establishes the session between the terminal device and the media processing module through the following steps:
initiating a call request including information about a data reception address and transmits the call request to the terminal device;
receiving response information of the terminal device for the call request, the response information including information about a data transmission address;
transmitting the information about the data transmission address to the media processing module, and instructing the media processing module to receive the multimedia data according to the data reception address; and
transmitting session establishment information to the terminal device.

In an exemplary embodiment of this application, the signaling processing module is further configured to: pre-configure a forwarding policy in a UPF entity deployed on the edge computing node. The forwarding policy includes: forwarding multimedia data whose receiving port is within a preset range to the media processing module, and the information about the data reception address includes a target receiving port within the preset range.

In an exemplary embodiment of this application, the information about the data reception address includes information about a target receiving port Before transmitting the information about the data transmission address to the media processing module, the signaling processing module is further configured to: configure a forwarding policy in a user plane function entity deployed on the edge computing node. The forwarding policy includes: forwarding multimedia data whose receiving port is the target receiving port to the media processing module.

In an exemplary embodiment of this application, the signaling processing module is further configured to: delete the forwarding policy in a case that the session is ended.

In an exemplary embodiment of this application, the system includes: a user plane function entity, which is configured to forward, according to the forwarding policy, the multimedia data transmitted by the terminal device to the media processing module.

In an exemplary embodiment of this application, the controlling the session includes: keeping the session and ending the session.

In an exemplary embodiment of this application, the media processing module processes the multimedia data through the following steps:
decoding the multimedia data to obtain decoded data; and
performing computational analysis on the decoded data to convert the decoded data into structured multimedia data.

In an exemplary embodiment of this application, the media processing module is further configured to: transmit the structured multimedia data to the remote node.

According to a third aspect of this application, an electronic system is provided, including: two or more processors; and two or more memories, configured to store instructions executable by the two or more processors. The two or more processors are configured to execute the executable instructions to perform the method according to any one of the foregoing aspects.

According to a fourth aspect of this application, a computer-readable storage medium is provided, storing a computer program. The computer program, when executed by two or more processors, performs the method according to any one of the foregoing aspects.

According to a fifth aspect of this application, a computer program product is provided, including instructions. The instructions, when run, cause two or more processors to cooperate to perform the method according to any one of the foregoing aspects.

The exemplary embodiments of this application may have some or all of the following beneficial effects. In the multimedia data processing method in the embodiments of this application, a media processing module is deployed on an edge computing node, a signaling processing module is deployed on a remote node, the signaling processing module establishes a session between a terminal device and the media processing module, and controls the session, and the media processing module receives multimedia data transmitted by the terminal device, and processes the multimedia data. On one hand, the signaling processing module only needs to process control signaling, and quantities of network resources and computing resources occupied by the signaling processing module are not large, so that one signaling processing module may simultaneously responsible for sessions between multiple media processing modules distributed on different edge computing nodes and multiple terminal devices. Therefore, based on the method in the embodiments of this application, a deployment mode applied to multimedia data processing can be simplified, to significantly reduce deployment complexity of the edge computing nodes, and infrastructure resources that need to be deployed on the edge computing nodes can also be reduced, thereby reducing deployment costs. On the other hand, because the signaling processing module is deployed on the remote node, installation, upgrade, and maintenance of the signaling processing module also become simple and convenient. In addition, there is only a stateless media processing module in the edge computing node, so that an edge computing service deployed in the edge computing node is of a consistent single service type, and management and operation and maintenance work on the edge computing node is efficient. Therefore, with the method in this exemplary embodiment, the operation and maintenance efficiency of the entire system can be greatly improved, and operation and maintenance costs can be reduced.

It is to be understood that, the foregoing general descriptions and the following detailed descriptions are merely for illustration and explanation purposes and are not intended to limit this application.

### BRIEF DESCRIPTION OF THE DRAWINGS

The drawings herein are incorporated into the specification and constitute a part of this specification, show embodiments that conform to the present disclosure, and are used for describing the principle of the present disclosure together with the specification. Apparently, the drawings described below are merely some embodiments of this application, and a person of ordinary skill in the art may further obtain other drawings according to the drawings without creative efforts.
FIG. 1 is a schematic diagram of an exemplary system architecture to which a multimedia data processing method and apparatus according to embodiments of this application is applicable.
FIG. 2 is a schematic structural diagram of a computer system adapted to implement an electronic device according to an embodiment of this application.
FIG. 3 is a schematic diagram of a deployment architecture of a multimedia data processing apparatus according to an embodiment of this application.
FIG. 4 is a schematic diagram of a deployment architecture of a multimedia data processing apparatus according to an embodiment of this application.
FIG. 5 is a schematic flowchart of a multimedia data processing method according to an embodiment of this application.
FIG. 6 is a schematic flowchart of a process of establishing a multimedia session according to an embodiment of this application.
FIG. 7 is a schematic interaction flowchart of a process of establishing a multimedia session according to an embodiment of this application.
FIG. 8 is a schematic interaction flowchart of a process of establishing a multimedia session according to an embodiment of this application.
FIG. 9 is a schematic flowchart of steps of processing multimedia data according to an embodiment of this application.
FIG. 10 is a schematic block diagram of a multimedia data processing apparatus according to an embodiment of this application.

### DESCRIPTION OF EMBODIMENTS

Exemplary embodiments are described more comprehensively with reference to the drawings. However, the exemplary embodiments can be implemented in various forms, and are not to be understood as being limited to the examples described herein. Instead, the embodiments are provided to make this application more comprehensive and complete and fully convey the idea of the exemplary embodiments to a person skilled in the art. The described features, structures, or characteristics may be combined in one or more embodiments in any appropriate manner. In the following description, many specific details are provided to give a full understanding of the embodiments of this application. However, it is to be appreciated by a person skilled in the art that one or more of the specific details may be omitted during practice of the technical solutions of this application, or other methods, components, apparatus, steps, or the like may be used. In other cases, well-known technical solutions are not shown or described in detail to avoid obscuring aspects of the present disclosure.

In addition, the drawings are only schematic illustrations of this application and are not necessarily drawn to scale. The same reference numbers in the drawings represent the same or similar parts, and therefore, repeated descriptions thereof are omitted. Some of the block diagrams shown in the drawings are functional entities and do not necessarily correspond to physically or logically independent entities. The functional entities may be implemented in the form of software, or implemented in one or more hardware modules or integrated circuits, or implemented in different networks and/or processor apparatuses and/or micro-controller apparatuses.

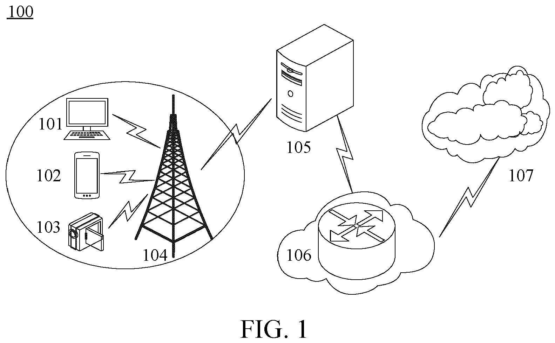

FIG. 1 is a schematic diagram of a system architecture of an application environment of a multimedia data processing method according to an embodiment of this application.

As shown in FIG. 1, the system architecture 100 may include a base station 104, an edge computing node 105, a local network computing platform 106, an Internet computing platform 107, and one or more of terminal devices 101, 102, and 103. The edge computing node 105 may be a computing platform close to a network access location, and may be located in an edge data center (DC). The local network computing platform 106 and the Internet computing platform 107 may serve as remote nodes in this application. The local network computing platform 106 may be located in a local data center (local DC). The Internet computing platform 107 may be located in an Internet data center (IDC). In addition, the system architecture is shown as a three-layer network structure in FIG. 1, and the system architecture may be alternatively a twolayer network structure in another exemplary embodiment. That is, the edge computing node 105 may be directly communicatively connected to the Internet computing platform 107. The system architecture may be alternatively a network structure of more than three layers. This is not particularly limited in this exemplary embodiment.

The terminal devices 101, 102, and 103 may be various electronic devices, including, but not limited to, cameras, desktop computers, portable computers, smartphones, tablet computers, and the like. Each of the edge computing node 105, the local network computing platform 106, and the Internet computing platform 107 includes a server. It is to be understood that the numbers of terminal devices, networks, and servers in FIG. 1 are merely exemplary. There may be any number of terminal devices, networks, and servers according to implementation requirements. For example, the edge computing node 105, the local network computing platform 106, and the Internet computing platform 107 may be a server cluster including multiple servers. In another example, the local network computing platform 106 and the Internet computing platform 107 may be alternatively cloud computing platforms, thereby implementing an edge-cloud collaboration architecture. That is, the edge computing node and remote cloud computing platforms operate collaboratively.

The multimedia data processing method in the embodiments of this application is generally performed by a server, and correspondingly, a multimedia data processing apparatus is generally arranged in the server. For example, in an exemplary embodiment, a mobile edge computing (MEC) application may be deployed on the edge computing node 105, to implement quick download of various content, services, and applications in a network, to provide consumers with uninterrupted high-quality network experience. Network traffic that is not processed by the MEC application may be forwarded to a user plane function (UPF) entity in the local network computing platform 106 by a UPF entity in the edge computing node 105, and finally transmitted to the Internet computing platform 107.

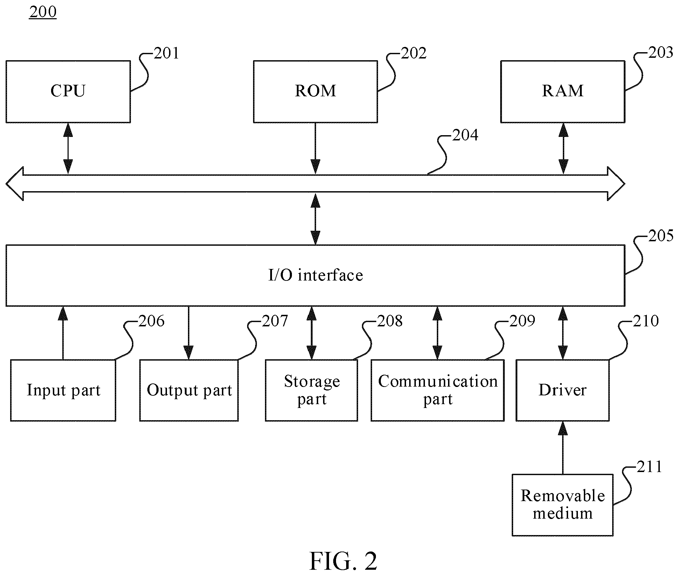

FIG. 2 is a schematic structural diagram of a computer system adapted to implement an electronic device according to an embodiment of this application.

It is to be noted that a computer system 200 of the electronic device shown in FIG. 2 is merely an example, and does not constitute any limitation on functions and use ranges of the embodiments of this application.

As shown in FIG. 2, the computer system 200 includes a central processing unit (CPU) 201. The CPU 201 may perform various appropriate operations and processing according to a program stored in a read-only memory (ROM) 202 or a program loaded from a storage portion 208 into a random access memory (RAM) 203. The RAM 203 further stores various programs and data required for system operations. The CPU 201, the ROM 202, and the RAM 203 are connected to each other via a bus 204. An input/output (I/O) interface 205 is also connected to the bus 204.

The following components are connected to the I/O interface 205: an input part 206 including a keyboard, a mouse, or the like; an output part 207 including a cathode ray tube (CRT), a liquid crystal display (LCD), a speaker, or the like; a storage part 208 including a hard disk, or the like; and a communication part 209 including a network interface card such as a local area network (LAN) card or a modem. The communication part 209 performs communication processing by using a network such as the Internet. A driver 210 is also connected to the I/O interface 205 as required. A removable medium 211, such as a magnetic disk, an optical disc, a magneto-optical disk, or a semiconductor memory, is installed on the drive 210 as required, so that a computer program read from the removable medium is installed into the storage part 208 as required.

Specifically, according to an embodiment of this application, the processes described in the following by referring to the flowcharts may be implemented as computer software programs. For example, this embodiment of this application includes a computer program product, the computer program product includes a computer program carried on a computer-readable medium, and the computer program includes program codes used for performing the methods shown in the flowcharts. In such an embodiment, the computer program may be downloaded and installed from a network through the communication part 209, and/or installed from the removable medium 211. When the computer program is executed by the CPU 201, various functions defined in the method and apparatus of this application are executed. In some embodiments, the computer system 200 may further include an artificial intelligence (AI) processor. The AI processor is configured to process computing operations related to machine learning.

It is to be noted that the computer-readable medium shown in this application may be a computer-readable signal medium or a computer-readable storage medium or any combination of the two. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include but is not limited to: an electrical connection having one or more wires, a portable computer magnetic disk, a hard disk, a random access memory (RAM), a read only memory (ROM), an erasable programmable read-only memory (EPROM), a flash memory, an optical fiber, a compact disk read-only memory (CD-ROM), an optical storage device, a magnetic storage device, or any appropriate combination thereof.

In this application, the computer-readable storage medium may be any tangible medium containing or storing a program, and the program may be used by or used in combination with an instruction execution system, an apparatus, or a device. In this application, a computer-readable signal medium may include a data signal being in a baseband or propagated as a part of a carrier wave, the data signal carrying computer-readable program code. The propagated data signal may be in multiple forms, including but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in conjunction with an instruction execution system, an apparatus, or a device. The program code contained in the computer readable medium may be transmitted by using any appropriate medium, including but not limited to: a wireless medium, a wire, an optical cable, RF, and any suitable combination thereof.

The flowcharts and block diagrams in the drawings illustrate possible system architectures, functions and operations that may be implemented by a system, a method, and a computer program product according to various embodiments of this application. In this regard, each box in a flowchart or a block diagram may represent a module, a program segment, or a part of codes. The module, the program segment, or the part of codes includes one or more executable instructions used for implementing designated logic functions. It is to be noted that in some alternative implementation solutions, functions annotated in boxes may alternatively be implemented in a sequence different from that annotated in the drawings. For example, two boxes shown successively may be performed basically in parallel, or in a reverse sequence, which is determined by a related function. It is also to be noted that each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The involved units described in the embodiments of the present disclosure may be implemented in a software manner, or may be implemented in a hardware manner, and the described units may also be disposed in a processor. Names of the units do not constitute a limitation on the units in a specific case.

According to another aspect, a computer-readable medium is further provided in this application. The computer-readable medium may be included in the electronic device described in the foregoing embodiments, or may exist dependently and is not arranged in the electronic device. The computer-readable medium carries one or more programs, the one or more programs, when executed by the electronic device, causing the electronic device to implement the method described in the following embodiments.

The technical solutions in the embodiments of this application are described below in detail.

Based on an edge computing network deployment architecture shown in FIG. 1, there may be different solutions for different application scenarios.

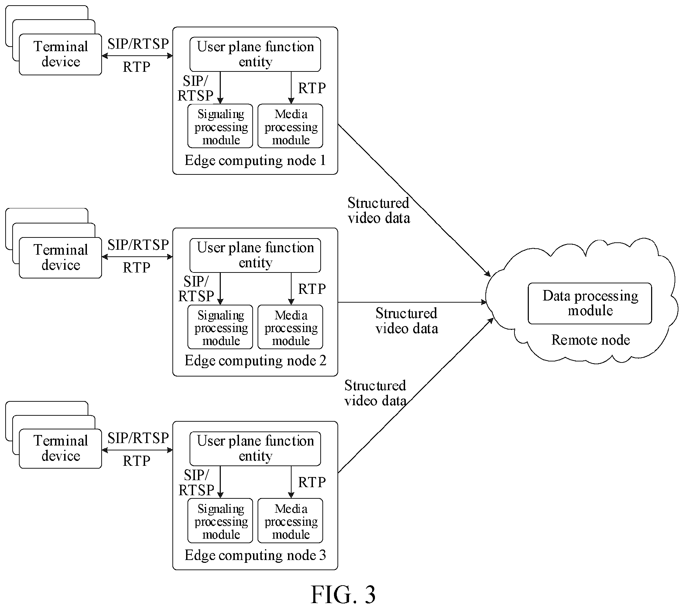

A video surveillance application scenario based on edge computing is used as an example. An implementation solution provided by the inventor is as shown in FIG. 3. In this implementation solution, a signaling processing module and a media processing module are deployed on an edge computing node. The signaling processing module controls access of a video. The media processing module performs video analysis based on a graphics processing unit (GPU) and a deep neural network on the received video, to output structured video data, and then transmits the structured video data to a data processing module deployed on a remote node. The data processing module performs processing such as retrieval and analysis based on the structured video data.

Based on this implementation solution, on one hand, the edge computing node deployed on a user side performs video session signaling processing and media processing, thereby improving video real-time processing efficiency. On the other hand, the data processing module deployed on the remote node receives and processes the structured video data transmitted by the edge computing node, which can avoid transmission of original video media data between the edge computing node and the remote node, thereby effectively decreasing a requirement for network bandwidth between the edge computing node and the remote node.

A video on-demand application scenario based on edge computing is used as an example. An implementation solution provided by the inventor includes: deploying a signaling processing module and a media processing module on an edge computing node including a stream media server, and deploying a content delivery network (CDN) management server on a remote node. When a user requests a stream media on-demand service, the request is first submitted to the CDN management server deployed on the remote node. The CDN management server selects, according to a corresponding policy, a stream media server deployed in the corresponding edge computing node, and forwards the request of the user to the stream media server, to provide the user with high-quality and low-latency video on-demand service nearby. In addition, video data transmission between a user terminal device and the remote node is reduced.

In the implementation solutions of the two foregoing scenarios, a service server needs to be completely deployed on each edge computing node, and the service server includes a signaling processing module and a media processing module. The signaling processing module and the media processing module are simultaneously deployed on the edge computing node, which increases system deployment complexity, and increases system deployment costs. In addition, during system upgrade or expansion, the signaling processing module and the media processing module that are deployed in each edge computing node need to be separately upgraded or expanded, and system operation and maintenance efficiency is low and costs are high.

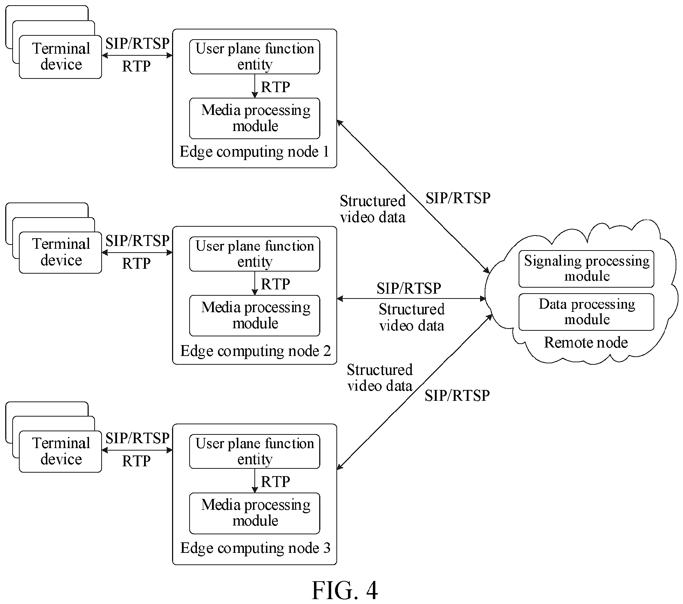

In a multimedia session service system, the signaling processing module is responsible for establishing a media session. Throughout one session from initiation to end, the entire signaling interaction occupies very few computing resources, and compared with network resources occupied by media transmission, network resources occupied by the entire signaling interaction may be ignored. Based on the above, a multimedia data processing method is provided in this application. The multimedia data processing method may be applicable to a multimedia session application-oriented deployment architecture shown in FIG. 4.

Referring to FIG. 4, in the deployment architecture, a multimedia data processing apparatus includes a signaling processing module and media processing modules. The signaling processing module is deployed on a remote node, for example, the foregoing local network computing platform 106 or Internet computing platform 107, and the media processing module is deployed on an edge computing node 105, to implement a simple and flexible edge computing application. Based on the deployment architecture, signaling processing of multimedia sessions between user terminal devices and the multimedia data processing apparatus is performed by the signaling processing module deployed on the remote node, and multimedia processing between the user terminal devices and the multimedia data processing apparatus is performed by the media processing modules that are deployed on edge computing nodes in a scattered manner.

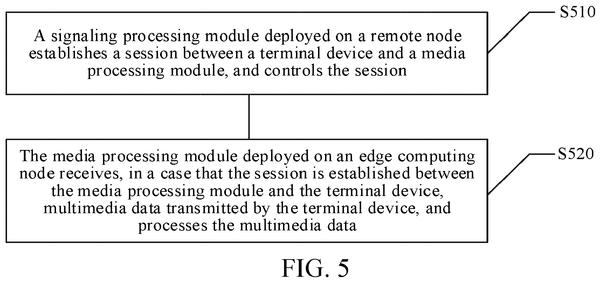

The multimedia data processing method based on the foregoing deployment architecture is described below with reference to FIG. 5. Referring to FIG. 5, the method may include the following step S510 and step S520.

In step S510, a signaling processing module deployed on a remote node establishes a session between a terminal device and a media processing module, and controls the session.

In this exemplary embodiment, the session is a process in which a terminal device communicates with a media processing module. The signaling processing module may establish a session between the terminal device and the media processing module. In addition, the signaling processing module may further control to keep the session and end the session.

The signaling processing module is generally deployed on a remote room. A video surveillance application scenario is used as an example. Protocols supported by the signaling processing module may include multimedia session protocols such as a session initiation protocol (SIP) and a real-time stream protocol (RTSP). According to different application scenarios and requirements, protocols supported by the signaling processing module may alternatively include other multimedia session protocols such as an HTTP Live Streaming (HLS) and a real time messaging protocol (RTMP). In a non-multimedia session application scenario, the signaling processing module may further support a non-multimedia session protocol. This exemplary embodiment is not limited thereto.

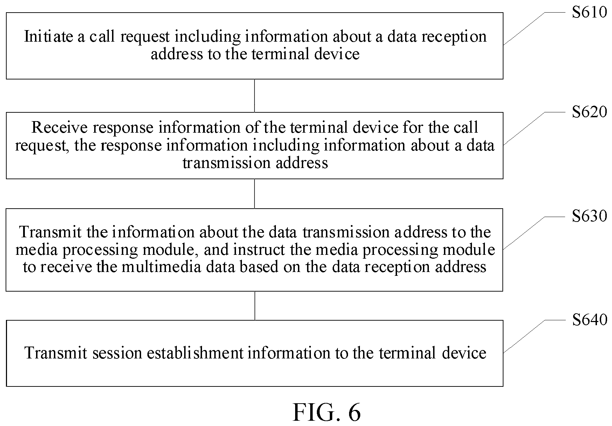

Referring to FIG. 6, in this exemplary embodiment, the session between the terminal device and the media processing module may be established through the following step S610 to step S640.

In step S610, a call request including information about a data reception address is initiated and transmitted to the terminal device.

For example, after receiving a camera video access request initiated by a service administrator, the signaling processing module may initiate, for example, a SIP\RTSP call request and transmitted to a camera. The call request may include, for example, information about a data reception address in a session description protocol (SDP) format. The information about the data reception address may include information about an IP address of the media processing module, a connection port number and the like.

In step S620, response information of the terminal device for the call request is received, the response information includes information about a data transmission address.

For example, after receiving the call request of the signaling processing module, the camera may reply response information to the signaling processing module. The response information may include, for example, information about a data transmission address in an SDP format. The information about the data transmission address may include information about a camera identifier (for example, an ID) and a source IP address and a transport port number that are used for transmitting multimedia data by the camera.

In step S630, the information about the data transmission address is transmitted to the media processing module, and the media processing module is instructed to receive the multimedia data based on the data reception address.

In step S640, session establishment information is transmitted to the terminal device.

During the session, a user plane function entity may directly exchange protocols of a control plane such as a SIP or an RTSP between the terminal device and the signaling processing module according to a configuration policy. In this exemplary embodiment, the user plane function entity may be a user plane device in a 5G network, but is not limited thereto. For example, the user plane function entity may be alternatively a non-mobile communication gateway device such as a wireless access gateway (for example, a Wi-Fi gateway) or a wired access gateway. Forwarding policies of the user plane function entity for multimedia data may include a static policy and a dynamic policy.

Based on the static policy, a forwarding policy needs to be pre-configured in a user plane function entity deployed on the edge computing node, the forwarding policy includes: forwarding multimedia data whose receiving port is within a preset range to the media processing module, where the information about the data reception address includes a target receiving port within the preset range.

In addition, during a multimedia session negotiation process, it is required that the terminal device set a receiving port in the preset range. The foregoing video surveillance application scenario is used as an example. Based on a SIP, during an SDP negotiation process, the camera needs to limit the target receiving port of the transmitted multimedia data to be within a range of 10000 to 20000, and a forwarding policy is then configured in the user plane function entity. Any received IP packet, for example, a user datagram protocol (UDP) message, that is of a real-time transport protocol (RTP) type and whose target receiving port is in a range of 10000 to 20000, that is transmitted by the camera is forwarded to a port corresponding to the media processing module.

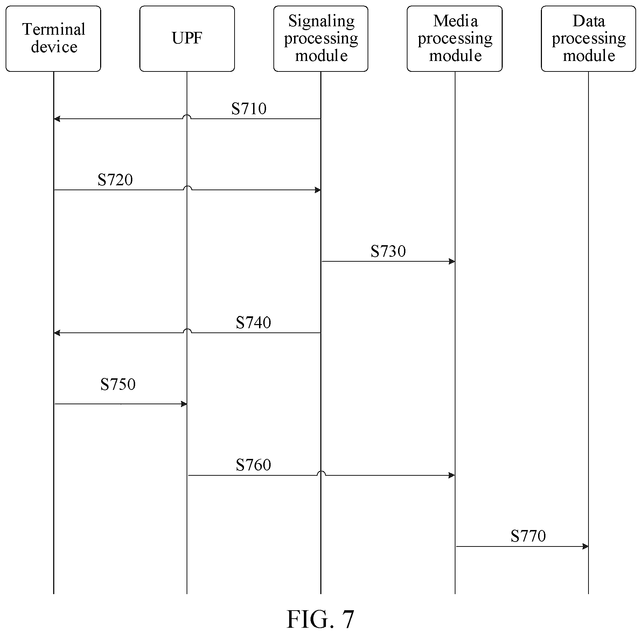

FIG. 7 is a schematic diagram of a process of a session based on a static policy. The process includes the following step S710 to step S760.

In step S710, after receiving a camera video access request initiated by a service administrator, the signaling processing module initiates a SIP\RTSP call request and transmits the call request to a camera. The call request may include, for example, information about a data reception address in an SDP format. The information about the data reception address needs to limit that a data receiving port is a free port A within a range of 10000 to 20000. A connection address is specified as an IP address of the media processing module.

In step S720, after receiving the call request of the signaling processing module, the camera may reply response information to the signaling processing module. The response information may include, for example, information about a data transmission address in an SDP format. The information about the data transmission address may include information about a camera identifier (for example, an ID), a source IP address and a transport port number that are used for transmitting multimedia data by the camera, and the like.

In step S730, after receiving the response information of the camera, the signaling processing module transmits an instruction to the media processing module. The instruction includes information about the camera identifier and the source IP address, the transport port number that are used for transmitting the multimedia data by the camera and the like, to instruct the media processing module to receive, at the port A, the multimedia data transmitted by the camera.

In step S740, the signaling processing module transmits session establishment information to the terminal device, to confirm that the session has been established.

In step S750, the camera transmits a multimedia data message to the user plane function entity of the edge computing node, where a target receiving port of the multimedia data packet is the port A.

In step S760, after receiving the multimedia data packet transmitted by the camera, the user plane function entity of the edge computing node forwards the multimedia data message to the port A of the media processing module according to a preset forwarding policy.

Based on the dynamic policy, the information about the data reception address includes information about a target receiving port. Before the step of transmitting the information about the data transmission address to the media processing module, the method further includes: configuring a forwarding policy in a user plane function entity deployed on the edge computing node, where the forwarding policy includes: forwarding multimedia data whose receiving port is the target receiving port to the media processing module.

The foregoing video surveillance application scenario is used as an example. For example, based on a SIP, a free port B may be randomly selected as a target receiving port during the SDP negotiation process, and a forwarding policy is then configured in the user plane function entity. Any received IP packet, for example, a UDP message, that is of an RTP type and whose target receiving port is the port B, that is transmitted by the camera is forwarded to the port B corresponding to the media processing module.

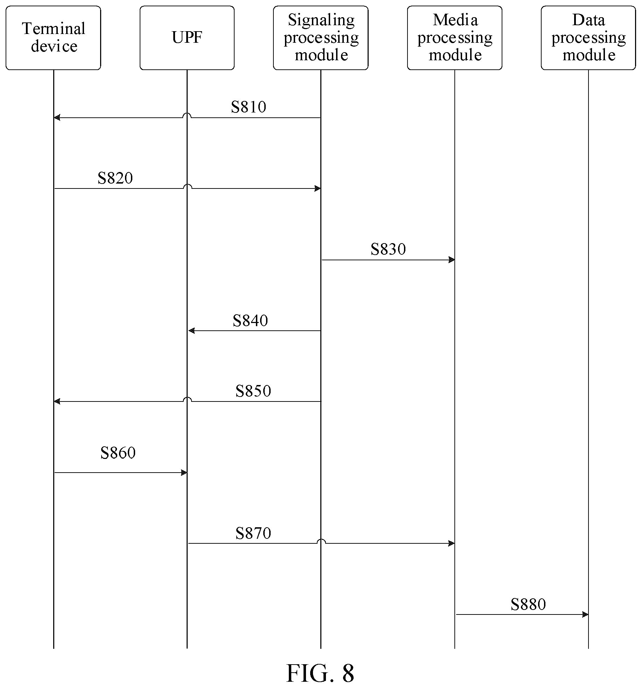

FIG. 8 is a schematic diagram of a process of a session based on a dynamic policy. The process includes the following step S810 to step S870.

In step S810, after receiving a camera video access request initiated by a service administrator, the signaling processing module initiates a SIP\RTSP call request and transmits the call request to a camera. The call request may include, for example, information about a data reception address in an SDP format. The information about the data reception address needs to limit that a data receiving port is a randomly selected free port B. A connection address is specified as an IP address of the media processing module.

In step S820, after receiving the call request of the signaling processing module, the camera may reply response information to the signaling processing module. The response information may include, for example, information about a data transmission address in an SDP format. The information about the data transmission address may include information about a camera identifier (for example, an ID), a source IP address and a transport port number that are used for transmitting multimedia data by the camera, and the like.

In step S830, after receiving the response information of the camera, the signaling processing module transmits an instruction to the user plane function entity, to set a forwarding policy of the user plane function entity. The forwarding policy requires that any received IP packet, for example, a UDP message, that is of an RTP type and whose target receiving port is the port B, that is transmitted by the camera is forwarded to the port B corresponding to the media processing module.

In step S840, the signaling processing module transmits an instruction to the media processing module, where the instruction includes information about the camera identifier, the source IP address and the transport port number that are used for transmitting the multimedia data by the camera and the like, to instruct the media processing module to receive, at the port B, the multimedia data transmitted by the camera.

In step S850, the signaling processing module transmits session establishment information to the terminal device, to confirm that the session has been established.

In step S860, the camera transmits a multimedia data message to the user plane function entity of the edge computing node, where a target receiving port of the multimedia data message is the port B.

In step S870, after receiving the multimedia data message transmitted by the camera, the user plane function entity of the edge computing node forwards the multimedia data message to the port B of the media processing module according to a preset forwarding policy.

In addition, in a case that the session is ended, the foregoing set dynamic forwarding policy may be deleted, to avoid the impact on establishment of a subsequent session.

In step S520, the media processing module deployed on an edge computing node receives, after the session is established between the media processing module and the terminal device, multimedia data transmitted by the terminal device, and processes the multimedia data.

In this exemplary embodiment, the media processing module is deployed on the edge computing node. The media processing module is mainly responsible for processing multimedia data, including reception of an audio-video media packet, decoding of audio data and video data, audio content and video content analysis based on a deep learning method, and the like. If audio content and video content analysis is performed by using a deep learning method, the media processing module usually needs a GPU to improve computing performance in media analysis. Based on this, in this exemplary embodiment, the processing the multimedia data may include the following step S910 and step S920.

In step S910, the multimedia data is decoded, to obtain decoded data.

In this exemplary embodiment, lossless decoding may be performed on the multimedia data. That is, a decoded image is strictly the same as an original image, and compression is completely restorable or unbiased without distortion. To reduce a data volume, lossy decoding may be alternatively used. A decoding module may be a software module or a hardware module. This is not particularly limited in this exemplary embodiment.

In step S920, computational analysis is performed on the decoded data to convert the decoded data into structured multimedia data.

In this exemplary embodiment, structural extraction may be performed on important information in content of the multimedia data, and processing means such as spatiotemporal segmentation, feature extraction, object recognition, and deep learning may be used to process the important information into text information or visualized graphical information that can be understood by a computer or a person. Through structuring of the multimedia data, a large quantity of original surveillance videos that have slow response and of which a majority has no application value can be finely compressed, thereby greatly improving the search and investigation efficiency, and greatly reducing occupied storage space.

Referring to step S770 in FIG. 7 or step S880 in FIG. 8, after converting the multimedia data into structured multimedia data, the media processing module may further transmit the structured multimedia data to the remote node. For example, the media processing module transmits the structured multimedia data to the data processing module of the local network computing platform 106 or the Internet computing platform 107.

In this exemplary embodiment, the data processing module may perform, according to requirements of products and by using the structured multimedia data, operations such as multimedia retrieval or recognition, for example, face retrieval, face recognition, and human body behavior analysis. For example, structured databases such as a face photo database, a face feature database, a behavior picture and feature library, and a vehicle image and feature library may be established based on processing structures, and a corresponding retrieval engine is established by combining the databases and associated video clip databases, to obtain depth information of various databases and make full use of functions of big data, thereby improving application value of video data, and improving analysis and prediction functions for the video data.

In the multimedia data processing method in this exemplary embodiment, the media processing module is deployed on the edge computing node, and the signaling processing module is deployed on the remote node. The number of deployed media processing modules depends on the number of accessed terminal devices, for example, the number of cameras. The signaling processing module only needs to process control signaling, and quantities of network resources and computing resources occupied by the signaling processing module are not large, so that one signaling processing module may be simultaneously responsible for sessions between multiple media processing modules distributed on different edge computing nodes and multiple terminal devices. For example, a SIP signaling processing module deployed on a general-purpose X86 architecture server can generally simultaneously support thousands of SIP calls, that is, can simultaneously process thousands of sessions between cameras and media processing modules that support a SIP. For example, the signaling processing module only needs to start one or more service instances, service requirements of media processing modules of all edge computing nodes and terminal devices in the whole network can be met. Therefore, based on the method in this exemplary embodiment, a deployment mode applied to a multimedia data processing can be simplified, to significantly reduce deployment complexity of the edge computing nodes; and infrastructure resources required by the edge computing nodes can further be reduced, thereby reducing deployment costs.

In addition, because the signaling processing module is deployed on the remote node, installation, upgrade, and maintenance of the signaling processing module also become simple and convenient. For the edge computing node, the signaling processing module is a stateful computing service, and the media processing module is a stateless computing service. In a case that the stateful signaling processing module is deployed on the remote node, there is only a stateless media processing module in the edge computing node, so that an edge computing service deployed in the edge computing node is of a consistent single service type, and management and operation and maintenance work on the edge computing node is efficient. Therefore, based on the method in this exemplary embodiment, the operation and maintenance efficiency of the entire system can be greatly improved, and operation and maintenance costs can be reduced.

In addition, in the multimedia data processing method in this exemplary embodiment, for the user plane function entity, because it is unnecessary to offload signaling control traffic to the edge computing node, forwarding policy configuration of the user plane function entity becomes simple and convenient. Therefore, complexity of a traffic offloading function of the entire system can also be reduced.

Descriptions are made in the foregoing exemplary embodiments by using the video surveillance application scenario as an example. In other exemplary embodiments of this application, the multimedia data processing method in this application may be alternatively applied to other application scenarios such as voice monitoring, an Internet of vehicles and automatic driving application, video on-demand, and game entertainment, which also fall within the protection scope of this application.

It is to be noted that although the steps of the method in this application are described in a specific order in the drawings, this does not require or imply that the steps are performed in the specific order, or the steps shown are all performed to achieve an expected result. Additionally, or alternatively, some steps may be omitted, multiple steps may be combined into one step, and/or one step may be decomposed into multiple steps, and the like.

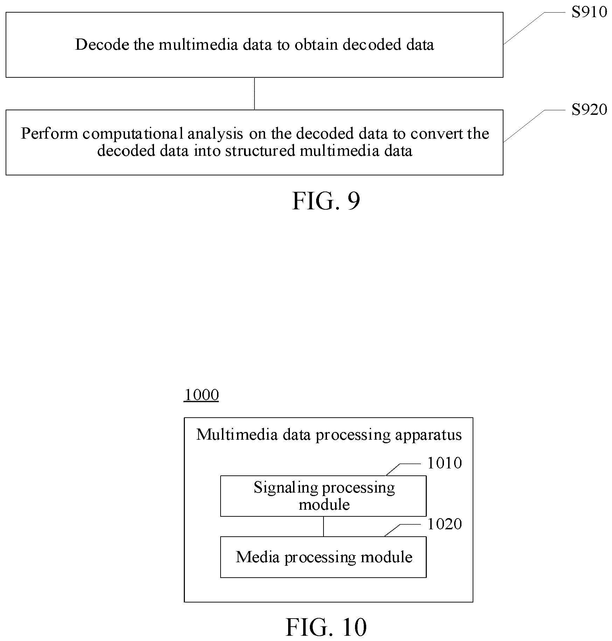

Further, in this exemplary embodiment, a multimedia data processing apparatus is further provided. Referring to FIG. 10, the multimedia data processing apparatus 1000 may include a signaling processing module 1010 and a media processing module 1020. The signaling processing module 1010 is deployed on a remote node, and is configured to: establish a session between a terminal device and the media processing module 1020, and control the session. The media processing module 1020 is deployed on an edge computing node, and is configured to: receive, in a case that the session is established between the media processing module and the terminal device, multimedia data transmitted by the terminal device, and process the multimedia data.

In this exemplary embodiment, the apparatus includes multiple signaling processing modules 1010 and multiple media processing modules 1020. The number of the signaling processing modules 1010 is less than the number of the media processing modules 1020.

In this exemplary embodiment, the apparatus includes one signaling processing module 1010 and multiple media processing modules 1020.

In this exemplary embodiment, the remote node includes a local network computing platform and/or an Internet computing platform.

In this exemplary embodiment, the signaling processing module 1010 establishes the session between the terminal device and the media processing module 1020 through the following steps:
initiating a call request including information about a data reception address and transmitting the call request to the terminal device;
receiving response information of the terminal device for the call request, the response information including information about a data transmission address;
transmitting the information about the data transmission address to the media processing module 1020, and instructing the media processing module 1020 to receive the multimedia data based on the data reception address; and
transmitting session establishment information to the terminal device.

In this exemplary embodiment, the signaling processing module 1010 is further configured to: pre-configure a forwarding policy in a user plane function entity deployed on the edge computing node. The forwarding policy includes: forwarding multimedia data whose receiving port is within a preset range to the media processing module 1020, and the information about the data reception address includes information about a target receiving port within the preset range.

In this exemplary embodiment, the information about the data reception address includes information about a target receiving port. Before the signaling processing module 1010 transmits the information about the data transmission address to the media processing module 1020, the signaling processing module 1010 is further configured to: configure a forwarding policy in a user plane function entity deployed on the edge computing node. The forwarding policy includes: forwarding multimedia data whose receiving port is the target receiving port to the media processing module 1020.

In this exemplary embodiment, the signaling processing module 1010 is further configured to: delete the forwarding policy in a case that the session is ended.

In this exemplary embodiment, the apparatus includes a user plane function entity, which is configured to forward, according to the forwarding policy, the multimedia data transmitted by the terminal device to the media processing module 1020.

In this exemplary embodiment, the controlling the session includes: keeping the session and ending the session.

In this exemplary embodiment, the media processing module 1020 processes the multimedia data through the following steps:
decoding the multimedia data to obtain decoded data; and
performing computational analysis on the decoded data to convert the decoded data into structured multimedia data.

In this exemplary embodiment, the media processing module 1020 is further configured to: transmit the structured multimedia data to the remote node.

Details of the modules or units of the multimedia data processing apparatus have been specifically described in the corresponding multimedia data processing method. Therefore, details are not described herein again.

It is to be noted that although multiple modules or units of a device configured to perform operations are discussed in the foregoing detailed description, such division is not mandatory. Actually, according to the embodiments of this application, the features and functions of two or more modules or units described above may be specifically implemented in one module or unit. On the contrary, the features and functions of one module or unit described above may be further divided to be embodied by multiple modules or units.

Other implementation solutions of this application are apparent to a person skilled in the art from consideration of the specification and practice of this application. This application is intended to cover any variations, uses, or adaptive changes of the present disclosure. These variations, uses, or adaptive changes follow the general principles of this application and include common general knowledge or common technical means in the art, which are not disclosed in this application. The specification and the embodiments are considered as merely exemplary, and the scope of this application are pointed out in the following claims.

It is to be understood that this application is not limited to the precise structures described above and shown in the drawings, and various modifications and changes can be made without departing from the scope of this application. The scope of this application is subject only to the claims.

## Claims

1. A multimedia data processing method, performed by a signaling processing module deployed on a remote node and a media processing module deployed on an edge computing node, the method comprising:
establishing (S510), by the signaling processing module, a session between a terminal device and the media processing module, and controlling (S510) the session by the signaling processing module, wherein a user plane function, UPF, entity in the edge computing node communicates with the media processing module deployed on the edge computing node;
receiving (S520), by the media processing module in a case that the session is established between the media processing module and the terminal device, multimedia data transmitted by the terminal device through the UPF entity in the edge computing node, wherein the multimedia data includes video data, and processing the multimedia data; and
performing, by the media processing module deployed on the edge computing node, an analysis of the video based on a graphics processing unit, GPU, to output structured video data;
transmitting, by the media processing module deployed on the edge computing node, the structured video data to the remote node; and
performing, by the remote node, an analysis based on the structured video data.

2. The multimedia data processing method according to claim 1, wherein the signaling processing module is used to simultaneously process the sessions between a plurality of media processing modules distributed on different edge computing nodes and a plurality of corresponding terminal devices.

3. The multimedia data processing method according to claim 1, wherein the establishing a session between a terminal device and a media processing module comprises:
initiating (S610) a call request and transmitting the call request to the terminal device, the call request comprising information about a data reception address;
receiving (S620) response information of the terminal device for the call request, the response information comprising information about a data transmission address;
transmitting (S630) the information about the data transmission address to the media processing module, and instructing the media processing module to receive the multimedia data based on the data reception address; and
transmitting (S640) session establishment information to the terminal device.

4. The multimedia data processing method according to claim 3, further comprising:
pre-configuring a forwarding policy in the user plane function entity deployed on the edge computing node, wherein
the forwarding policy comprises: forwarding multimedia data whose receiving port is within a preset range to the media processing module, and
the information about the data reception address comprises information about a target receiving port within the preset range.

5. The multimedia data processing method according to claim 3, wherein the information about the data reception address comprises information about a target receiving port, and before the transmitting the information about the data transmission address to the media processing module, the method further comprises:
configuring a forwarding policy in the user plane function entity deployed on the edge computing node, the forwarding policy comprising: forwarding multimedia data whose receiving port is the target receiving port to the media processing module.

6. The multimedia data processing method according to claim 5, further comprising:
deleting the forwarding policy in a case that the session is ended.

7. The multimedia data processing method according to any one of claims 4 to 6, further comprising:
forwarding, by the user plane function entity according to the forwarding policy, the multimedia data transmitted by the terminal device to the media processing module.

8. The multimedia data processing method according to claim 1, wherein the processing the multimedia data comprises:
decoding (S910) the multimedia data to obtain decoded data; and
performing (S920) computational analysis on the decoded data to convert the decoded data into structured multimedia data.

9. A multimedia data processing system, comprising: a signaling processing module (1010) and a media processing module (1020), wherein
the signaling processing module (1010) is deployed on a remote node, and is configured to: establish a session between a terminal device and the media processing module (1020), and control the session, wherein a user plane function, UPF, entity in the edge computing node communicates with the media processing module deployed on the edge computing node;
the media processing module (1020) is deployed on an edge computing node, and is configured to: receive, in a case that the session is established between the media processing module (1020) and the terminal device, multimedia data transmitted by the terminal device through the UPF entity in the edge computing node, wherein the multimedia data includes data of a video, and process the multimedia data, and
the media processing module is further configured to perform an analysis of the video based on a graphics processing unit, GPU, to output structured video data; and transmit the structured video data to the remote mode; and
the remote node is configured to perform an analysis based on the structured video data.

10. The multimedia data processing system according to claim 9, comprising a plurality of signaling processing modules (1010) and a plurality of media processing modules (1020), the number of the signaling processing modules (1010) being less than the number of the media processing modules (1020).

11. The multimedia data processing system according to claim 9, comprising one signaling processing module (1010) and a plurality of media processing modules (1020).

12. A computer-readable storage medium, storing computer programs, the computer programs, when executed by two or more processors, performing the method according to any one of claims 1 to 8.

13. An electronic system, comprising:
two or more processors; and
two or more memories, configured to store instructions executable by the two or more processors,
the two or more processors being configured to execute the executable instructions to perform the method according to any one of claims 1 to 8.

14. A computer program product, comprising instructions, the instructions, when executed, causing two or more processors to cooperate to perform the method according to any one of claims 1 to 8.

## Patentansprüche

1. Multimedia-Datenverarbeitungsverfahren, durchgeführt von einem auf einem entfernten Knoten eingesetzten Signalverarbeitungsmodul und einem auf einem Edge-Computing-Knoten eingesetzten Medienverarbeitungsmodul, wobei das Verfahren Folgendes beinhaltet:
Einrichten (S510), durch das Signalverarbeitungsmodul, einer Sitzung zwischen einem Endgerät und dem Medienverarbeitungsmodul, und Steuern (S510) der Sitzung durch das Signalverarbeitungsmodul, wobei eine UPF-(User Plane Function)-Entität in dem Edge-Computing-Knoten mit dem in dem Edge-Computing-Knoten eingesetzten Medienverarbeitungsmodul kommuniziert;
Empfangen (S520), durch das Medienverarbeitungsmodul, falls die Sitzung zwischen dem Medienverarbeitungsmodul und dem Endgerät eingerichtet wird, von von dem Endgerät über die UPF-Entität in dem Edge-Computing-Knoten übertragenen Multimedia-Daten, wobei die Multimedia-Daten Videodaten enthalten, und Verarbeiten der Multimedia-Daten; und
Durchführen, durch das auf dem Edge-Computing-Knoten eingesetzte Medienverarbeitungsmodul, einer Analyse des Videos auf der Basis einer Grafikverarbeitungseinheit, GPU, um strukturierte Videodaten auszugeben;
Übertragen der strukturierten Videodaten durch das auf dem Edge-Computing-Knoten eingesetzte Medienverarbeitungsmodul zu dem entfernten Knoten; und
Durchführen einer Analyse auf der Basis der strukturierten Videodaten durch den entfernten Knoten.

2. Multimedia-Datenverarbeitungsverfahren nach Anspruch 1, wobei das Signalverarbeitungsmodul zum gleichzeitigen Verarbeiten der Sitzungen zwischen mehreren auf verschiedenen Edge-Computing-Knoten verteilten Medienverarbeitungsmodulen und mehreren entsprechenden Endgeräten verwendet wird.

3. Multimedia-Datenverarbeitungsverfahren nach Anspruch 1, wobei das Einrichten einer Sitzung zwischen einem Endgerät und einem Medienverarbeitungsmodul Folgendes beinhaltet:
Initiieren (S610) einer Verbindungsanforderung und Übertragen der Verbindungsanforderung zu dem Endgerät, wobei die Verbindungsanforderung Informationen über eine Datenempfangsadresse umfasst;
Empfangen (S620) von Antwortinformationen des Endgeräts für die Verbindungsanforderung, wobei die Antwortinformationen Informationen über eine Datenübertragungsadresse enthalten;
Übertragen (S630) der Informationen über die Datenübertragungsadresse zu dem Medienverarbeitungsmodul und Anweisen des Medienverarbeitungsmoduls zum Empfangen der Multimedia-Daten auf der Basis der Datenempfangsadresse; und
Übertragen (S640) von Sitzungseinrichtungsinformationen zu dem Endgerät.

4. Multimedia-Datenverarbeitungsverfahren nach Anspruch 3, das ferner Folgendes beinhaltet:
Vorkonfigurieren einer Weiterleitungsrichtlinie in der auf dem Edge-Computing-Knoten eingesetzten UFP-Entität, wobei
die Weiterleitungsrichtlinie Folgendes umfasst: Weiterleiten von Multimediadaten, deren Empfangsport innerhalb eines voreingestellten Bereichs liegt, an das Medienverarbeitungsmodul, und
die Informationen über die Datenempfangsadresse Informationen über einen Zielempfangsport innerhalb des voreingestellten Bereichs umfassen.

5. Multimedia-Datenverarbeitungsverfahren nach Anspruch 3, wobei die Informationen über die Datenempfangsadresse Informationen über einen Zielempfangsport umfassen und das Verfahren vor dem Übertragen der Informationen über die Datenübertragungsadresse zu dem Medienverarbeitungsmodul ferner Folgendes beinhaltet:
Konfigurieren einer Weiterleitungsrichtlinie in der auf dem Edge-Computing-Knoten eingesetzten UPF-Entität, wobei die Weiterleitungsrichtlinie Folgendes umfasst: Weiterleiten von Multimedia-Daten, deren Empfangsport der Zielempfangsport ist, zu dem Medienverarbeitungsmodul.

6. Multimedia-Datenverarbeitungsverfahren nach Anspruch 5, das ferner Folgendes beinhaltet:
Löschen der Weiterleitungsrichtlinie, falls die Sitzung beendet wird.

7. Multimedia-Datenverarbeitungsverfahren nach einem der Ansprüche 4 bis 6, das ferner Folgendes beinhaltet:
Weiterleiten, durch die UPF-Entität gemäß der Weiterleitungsrichtlinie, der vom Endgerät übertragenen Multimedia-Daten an das Medienverarbeitungsmodul.

8. Multimedia-Datenverarbeitungsverfahren nach Anspruch 1, wobei das Verarbeiten der Multimedia-Daten Folgendes beinhaltet:
Decodieren (S910) der Multimedia-Daten, um decodierte Daten zu erhalten; und
Durchführen (S920) einer rechnerischen Analyse an den decodierten Daten, um die decodierten Daten in strukturierte Multimedia-Daten umzuwandeln.

9. Multimedia-Datenverarbeitungssystem, das Folgendes umfasst: ein Signalverarbeitungsmodul (1010) und ein Medienverarbeitungsmodul (1020), wobei
das Signalverarbeitungsmodul (1010) auf einem entfernten Knoten eingesetzt wird und konfiguriert ist zum: Einrichten einer Sitzung zwischen einem Endgerät und dem Medienverarbeitungsmodul (1020) und Steuern der Sitzung, wobei eine UPF-(User Plane Function)-Entität in dem Edge-Computing-Knoten mit dem auf dem Edge-Computing-Knoten eingesetzten Medienverarbeitungsmodul kommuniziert;
das Medienverarbeitungsmodul (1020) auf einem Edge-Computing-Knoten eingesetzt wird und konfiguriert ist zum: Empfangen, falls die Sitzung zwischen dem Medienverarbeitungsmodul (1020) und dem Endgerät eingerichtet wird, von von dem Endgerät über die UPF-Entität in dem Edge-Computing-Knoten übertragenen Multimedia-Daten, wobei die Multimedia-Daten Daten eines Videos enthalten, und Verarbeiten der Multimedia-Daten, und
das Medienverarbeitungsmodul ferner zum Durchführen einer Analyse des Videos auf der Basis einer Grafikverarbeitungseinheit, GPU, zum Ausgeben strukturierter Videodaten; und zum Übertragen der strukturierten Videodaten zu dem entfernten Knoten konfiguriert ist; und
der entfernte Knoten zum Durchführen einer Analyse auf der Basis der strukturierten Videodaten konfiguriert ist.

10. Multimedia-Datenverarbeitungssystem nach Anspruch 9, das mehrere Signalverarbeitungsmodule (1010) und mehrere Medienverarbeitungsmodule (1020) umfasst, wobei die Anzahl der Signalverarbeitungsmodule (1010) geringer ist als die Anzahl der Medienverarbeitungsmodule (1020).

11. Multimedia-Datenverarbeitungssystem nach Anspruch 9, das ein Signalverarbeitungsmodul (1010) und mehrere Medienverarbeitungsmodule (1020) umfasst.

12. Computerlesbares Speichermedium, das Computerprogramme speichert, wobei die Computerprogramme bei Ausführung durch zwei oder mehr Prozessoren das Verfahren nach einem der Ansprüche 1 bis 8 durchführen.

13. Elektronisches System, das Folgendes umfasst:
zwei oder mehr Prozessoren; und
zwei oder mehr Speicher, die zum Speichern von Befehlen konfiguriert sind, die von den zwei oder mehr Prozessoren ausgeführt werden können,
wobei die zwei oder mehr Prozessoren zum Ausführen der ausführbaren Befehle zum Durchführen des Verfahrens nach einem der Ansprüche 1 bis 8 konfiguriert sind.

14. Computerprogrammprodukt, das Befehle umfasst, wobei die Befehle bei Ausführung zwei oder mehr Prozessoren zum Zusammenarbeiten zur Durchführung des Verfahrens nach einem der Ansprüche 1 bis 8 veranlassen.

## Revendications

1. Procédé de traitement de données multimédia, réalisé par un module de traitement de signalisation déployé sur un noeud distant et un module de traitement multimédia déployé sur un noeud d'informatique en périphérie, le procédé comprenant :
l'établissement (S510), par le module de traitement de signalisation, d'une session entre un dispositif terminal et le module de traitement multimédia, et la commande (S510) de la session par le module de traitement de signalisation, dans lequel une entité de fonction de plan utilisateur, UPF, dans le noeud d'informatique en périphérie communique avec le module de traitement multimédia déployé sur le noeud d'informatique en périphérie ;
la réception (S520), par le module de traitement multimédia, dans le cas où la session est établie entre le module de traitement multimédia et le dispositif terminal, de données multimédia transmises par le dispositif terminal par l'intermédiaire de l'entité UPF dans le noeud d'informatique en périphérie, dans lequel les données multimédia comportent des données vidéo, et le traitement des données multimédia ; et
la réalisation, par le module de traitement multimédia déployé sur le noeud d'informatique en périphérie, d'une analyse de la vidéo basée sur une unité de traitement graphique, GPU, pour délivrer en sortie des données vidéo structurées ;
la transmission, par le module de traitement multimédia déployé sur le noeud d'informatique en périphérie, des données vidéo structurées au noeud distant ; et
la réalisation, par le noeud distant, d'une analyse basée sur les données vidéo structurées.

2. Procédé de traitement de données multimédia selon la revendication 1, dans lequel le module de traitement de signalisation est utilisé pour traiter simultanément les sessions entre une pluralité de modules de traitement multimédia répartis sur différents noeuds d'informatique en périphérie et une pluralité de dispositifs terminaux correspondants.

3. Procédé de traitement de données multimédia selon la revendication 1, dans lequel l'établissement d'une session entre un dispositif terminal et un module de traitement multimédia comprend :
le lancement (S610) d'une demande d'appel et la transmission de la demande d'appel au dispositif terminal, la demande d'appel comprenant des informations relatives à une adresse de réception de données ;
la réception (S620) d'informations de réponse du dispositif terminal pour la demande d'appel, les informations de réponse comprenant des informations relatives à une adresse de transmission de données ;
la transmission (S630) des informations relatives à l'adresse de transmission de données au module de traitement multimédia, et l'instruction au module de traitement multimédia de recevoir les données multimédia en fonction de l'adresse de réception de données ; et
la transmission (S640) d'informations d'établissement de session au dispositif terminal.

4. Procédé de traitement de données multimédia selon la revendication 3, comprenant en outre :
la préconfiguration d'une stratégie de transfert dans l'entité de fonction de plan utilisateur déployée sur le noeud d'informatique en périphérie, dans lequel
la stratégie de transfert comprend : le transfert de données multimédia dont le port de réception se trouve en-deçà d'une portée prédéfinie du module de traitement multimédia, et
les informations relatives à l'adresse de réception des données comprennent des informations relatives à un port de réception cible en-deçà de la portée prédéfinie.

5. Procédé de traitement de données multimédia selon la revendication 3, dans lequel les informations relatives à l'adresse de réception de données comprennent des informations relatives à un port de réception cible, et avant la transmission des informations relatives à l'adresse de transmission de données au module de traitement multimédia, le procédé comprend en outre :
la configuration d'une stratégie de transfert dans l'entité de fonction de plan utilisateur déployée sur le noeud d'informatique en périphérie, la stratégie de transfert comprenant : le transfert de données multimédia dont le port de réception est le port de réception cible au module de traitement multimédia.

6. Procédé de traitement de données multimédia selon la revendication 5, comprenant en outre :
la suppression de la stratégie de transfert en cas de fin de session.

7. Procédé de traitement de données multimédia selon l'une quelconque des revendications 4 à 6, comprenant en outre :
le transfert, par l'entité de fonction de plan utilisateur conformément à la stratégie de transfert, des données multimédia transmises par le dispositif terminal au module de traitement multimédia.

8. Procédé de traitement de données multimédia selon la revendication 1, dans lequel le traitement des données multimédia comprend :
le décodage (S910) des données multimédia pour obtenir des données décodées ; et
la réalisation (S920) d'une analyse informatique sur les données décodées pour convertir les données décodées en données multimédia structurées.

9. Système de traitement de données multimédia, comprenant : un module de traitement de signalisation (1010) et un module de traitement multimédia (1020), dans lequel
le module de traitement de signalisation (1010) est déployé sur un noeud distant et est configuré pour : établir une session entre un dispositif terminal et le module de traitement multimédia (1020) et commander la session, dans lequel une entité de fonction de plan utilisateur, UPF, dans le noeud d'informatique en périphérie communique avec le module de traitement multimédia déployé sur le noeud d'informatique en périphérie ;
le module de traitement multimédia (1020) est déployé sur un noeud d'informatique en périphérie et est configuré pour : recevoir, dans le cas où la session est établie entre le module de traitement multimédia (1020) et le dispositif terminal, des données multimédia transmises par le dispositif terminal via l'entité UPF dans le noeud d'informatique en périphérie, dans lequel les données multimédia comportent des données d'une vidéo, et traiter les données multimédia, et
le module de traitement multimédia est configuré en outre pour réaliser une analyse de la vidéo basée sur une unité de traitement graphique, GPU, pour produire des données vidéo structurées ; et transmettre les données vidéo structurées au mode distant ; et
le noeud distant est configuré pour réaliser une analyse basée sur les données vidéo structurées.

10. Système de traitement de données multimédia selon la revendication 9, comprenant une pluralité de modules de traitement de signalisation (1010) et une pluralité de modules de traitement multimédia (1020), le nombre de modules de traitement de signalisation (1010) étant inférieur au nombre de modules de traitement multimédia (1020).

11. Système de traitement de données multimédia selon la revendication 9, comprenant un module de traitement de signalisation (1010) et une pluralité de modules de traitement multimédia (1020).

12. Support de stockage lisible par ordinateur, stockant des programmes d'ordinateur, les programmes d'ordinateur, à leur exécution par deux processeurs ou plus, réalisant le procédé selon l'une quelconque des revendications 1 à 8.

13. Système électronique, comprenant :
deux processeurs ou plus ; et
deux mémoires ou plus, configurées pour stocker des instructions exécutables par les deux processeurs ou plus,
les deux processeurs ou plus étant configurés pour exécuter les instructions exécutables afin de réaliser le procédé selon l'une quelconque des revendications 1 à 8.

14. Produit programme d'ordinateur, comprenant des instructions, les instructions, à leur exécution, amenant deux processeurs ou plus à coopérer pour réaliser le procédé selon l'une quelconque des revendications 1 à 8.
